(19) Europäisches Patentamt
European Patent Office
Office européen des brevets

(11) Veröffentlichungsnummer : **0 007 106**
**B1**

# (12) EUROPÄISCHE PATENTSCHRIFT

(45) Veröffentlichungstag der Patentschrift : **21.10.81**

(51) Int. Cl.$^3$ : **C 08 G 6/02**

(21) Anmeldenummer : **79102429.2**

(22) Anmeldetag : **13.07.79**

(54) **Verfahren zur Herstellung von Polykondensationsprodukten aus Ketonen und Aldehyden mit Hilfe von Phasentransferkatalysatoren.**

(30) Priorität : **19.07.78 DE 2831613**

(43) Veröffentlichungstag der Anmeldung : **23.01.80 (Patentblatt 80/02)**

(45) Bekanntmachung des Hinweises auf die Patenterteilung : **21.10.81 Patentblatt 81/42**

(84) Benannte Vertragsstaaten : **AT BE CH DE FR GB NL SE**

(56) Entgegenhaltungen :

**DE - B - 1 770 278**
**US - A - 3 518 229**

**ANGEWANDTE CHEMIE, Band 89, 1977, Weinheim, E.V. DEHMLOW «Fortschritte der Phasen-transfer-Katalyse», Seiten 521 bis 533**

**ULLMANNS ENCYKLOPÄDIE DER TECHNISCHEN CHEMIE, 4. Auflage, Band 12, 1976, Verlag Chemie, Weinheim, New York, Seiten 551 bis 552.**

(73) Patentinhaber : **BASF Aktiengesellschaft**
**Carl-Bosch-Strasse 38**
**D-6700 Ludwigshafen (DE)**

(72) Erfinder : **Hummerich, Rainer, Dr.-Chem.**
**Budapester Strasse 47**
**D-6700 Ludwigshafen (DE)**
Erfinder : **Balzer, Wolf-Dieter, Dr.-Chem.**
**Bruesseler Ring 34**
**D-6700 Ludwigshafen (DE)**
Erfinder : **Klug, Hans, Dr.-Chem.**
**Deidesheimer Strasse 3**
**D-6704 Mutterstadt (DE)**
Erfinder : **Trimborn, Werner, Dr.-Chem.**
**Hardenburgstrasse 22**
**D-6703 Limburgerhof (DE)**
Erfinder : **Krause, Hans-Joachim, Dr.-Chem.**
**Pariser Strasse 31**
**D-6700 Ludwigshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

EP 0 007 106 B1

# Verfahren zur Herstellung von Polykondensationsprodukten aus Ketonen und Aldehyden mit Hilfe von Phasentransferkatalysatoren

Die vorliegende Erfindung betrifft ein Verfahren zur Herstellung von Polykondensationsprodukten aus aliphatischen oder cyclischen Ketonen oder Gemischen dieser Ketone mit aliphatischen Aldehyden in Gegenwart basischer Katalysatoren und Verdünnungsmittel.

Es ist bekannt, daß Ketone oder Gemische aus Ketonen und Aldehyden in Gegenwart von Basen oder Säuren zu harzartigen Produkten umgesetzt werden können. So lassen sich aus Gemischen von Cyclohexanon und Methylcyclohexanon Harze herstellen (Ullmann Bd. 12, S. 551). Cyclohexanon und Formaldehyd reagieren zu Hartharzen, die in der Lackindustrie verwendet werden.

Verfahren zur Herstellung derartiger Produkte sind beispielsweise in
US-PS 25 40 885, US-PS 25 40 886, DE-PS 11 55 909, DL-PS 12 433, DE-PS 13 00 256, JA-PS 11665/67, DL-PS 123 481 und DE-PS 12 56 898
beschrieben.

Die nach den verschiedenen Verfahren erhaltenen Harze besitzen, wie auch aus einer in der DL-PS 123 481 gegebenen Übersicht hervorgeht, Erweichungspunkte bis zu 120 °C. Nur nach DL-PS 123 481 und DE-PS 12 56 898 kann man Harze mit Erweichungspunkten bis 160 °C erhalten ; die hierzu verwendeten Verfahren sind jedoch sehr aufwendig.

Ketonharze sind wertvolle Komponenten für Anstrichsysteme. Für Anwendungsgebiete, bei denen es auf schnelle Trocknung und Härte ankommt, sind Harze mit möglichst hohem Erweichungspunkt erwünscht.

Aufgabe der vorliegenden Erfindung ist es, ein Verfahren aufzuzeigen, mit dem es möglich ist, Ketonharze mit höheren Erweichungspunkten auf möglichst einfache Weise und in verbesserter Ausbeute herzustellen.

Gegenstand der vorliegenden Erfindung ist ein Verfahren zur Herstellung von Polykondensationsprodukten aus aliphatischen oder cyclischen Ketonen oder Gemischen dieser Ketone, ausgenommen Polyfluorketone, mit aliphatischen Aldehyden in Gegenwart basischer Katalysatoren, das dadurch gekennzeichnet ist, daß die Polykondensationsreaktion in Gegenwart von 0,005 bis 10 Molprozent, bezogen auf die Gesamtmenge an Keton und Aldehyd,
eines Tetraalkylammoniumsalzes der allgemeinen Formel

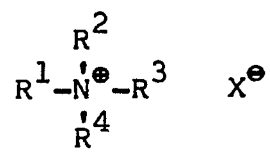

worin $R^1$, $R^2$, $R^3$ und $R^4$ untereinander gleich oder verschieden sein können und für Alkylreste mit 1 bis 22 Kohlenstoffatomen oder für funktionelle Gruppen, wie Hydroxyl-, Carbonamid- oder Äthergruppen enthaltende Alkylreste mit bis zu 25 Kohlenstoffatomen wie Methyl-, Äthyl-, (Iso-) propyl-, Butyl-, Octyl-, Dodecyl-, $C_{16}H_{33}-$, Hydroxy(iso) propyl- oder

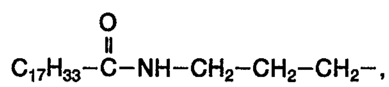

stehen können und $X^{\ominus}$ für ein Anion einer Säure wie
J, Cl, Br, $SO_2-$, $CH_3OSO-$, steht,
eines Tetraalkylphosphoniumsalzes der allgemeinen Formel

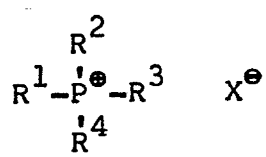

worin $R^1$, $R^2$, $R^3$, $R^4$ sowie $X^{\ominus}$ die oben angegebene Bedeutung haben, oder eines Kronenäthers durchgeführt wird.

Mit dem erfindungsgemäßen Verfahren gelingt es überraschenderweise, Ketonharze mit höheren Erweichungspunkten in verbesserter Ausbeute herzustellen. Ein weiterer Vorteil des erfindungsgemäßen Verfahrens besteht darin, daß die Menge der für die Kondensationsreaktion üblicherweise verwendeten basischen Katalysatoren drastisch verringert werden kann.

Außerdem ermöglicht es das erfindungsgemäße Verfahren, Aldehyde für die Herstellung von Ketonharzen einzusetzen, die für diesen Zweck nach den bekannten Verfahren bisher nicht verwendet werden konnten.

Als aliphatische und cyclische Ketone kommen als Ausgangskomponente für das erfindungsgemäße Polykondensationsverfahren in Frage Dialkylketone der allgemeinen Formel

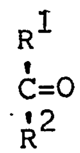

wobei $R^1$ und $R^2$ untereinander gleich oder verschieden sind und für einen Alkylrest mit 1 bis 4, vorzugsweise 1 bis 2 Kohlenstoffatome stehen, wie Aceton, Methyläthylketon, Methyl-(iso-) propylketon, Methylisobutylketon und andere, bzw. cyclische Ketone, wie Cyclopentanon, Cyclohexanon, Cycloheptanon sowie $C_1$ bis $C_4$-Alkyl- substituierte cyclische Ketone, wie Methylcyclohexanon sowie Gemische aliphatischer und cyclischer Ketone. Bevorzugt als Ketone geeignet sind Methyläthylketon, Methylisobutylketon, Cyclohexanon und Methylcyclohexanon.

Als aliphatische Aldehyde, die im Gemisch mit den aliphatischen oder cyclischen Ketonen für das erfindungsgemäße Verfahren eingesetzt werden können, eignen sich insbesondere Formaldehyd, der als wäßrige oder alkoholische (z.B. methanolische oder butanolische) Lösung oder in Form Formaldeyd liefernder Verbindungen wie Paraformaldehyd oder Trioxan eingesetzt werden kann, sowie längerkettige, gegebenenfalls verzweigte Aldehyde mit 1 bis 8 Kohlenstoffatomen, wie Acetaldehyd, n-Butyraldehyd, Isobutyraldehyd, Valerianaldehyd, Äthylhexanal sowie Gemische dieser Aldehyde.

Die längerkettigen Aldehyde, wie n-Butyraldehyd, Isobutyraldehyd und Valerianaldehyd lassen sich in Kombination mit Ketonen nach dem erfindungsgemäßen Verfahren zu wertvollen Harzen umsetzen, die unter konventionellen Bedingungen nicht oder nur sehr schlecht zur Reaktion gebracht werden konnten.

Als basische Katalysatoren eignen sich die für die Ketonharzherstellung üblicherweise verwendeten Verbindungen, wie Alkaliverbindungen, z.B. Hydroxide, wie NaOH, KOH, Alkoholate, wie $NaOCH_3$, K-tert.-Butylat, Carbonate, wie $Na_2CO_3$, $K_2CO_3$ oder Amide, wie $NaNH_2$.

Während üblicherweise für die Ketonharzherstellung nach bekannten Verfahren basische Katalysatoren in verhältnismäßig großen Mengen verwendet werden, kann bei dem erfindungsgemäßen Verfahren die Menge des basischen Katalysators wesentlich, bis auf etwa 1/4 bzw. noch geringere Mengen reduziert werden, ohne dadurch das jeweilige Polykondensationsverfahren nachteilig zu beeinflussen.

Erfindungsgemäß werden als zusätzliche Katalysatoren sogenannte Phasentransferkatalysatoren eingesetzt. Was unter Phasentransferkatalysatoren zu verstehen ist, kann der Veröffentlichung von Eckehard V. Dehmlow in Angewandte Chemie, Band 89 (1977), Seiten 521 bis 533 entnommen werden.

Für das erfindungsgemäße Verfahren besonders bevorzugte Phasentransferkatalysatoren sind :

1. Tetraalkylammoniumsalze der allgemeinen Formel (I)

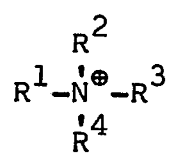 $X^{\ominus}$ , (I)

worin $R^1$, $R^2$, $R^3$ und $R^4$ untereinander gleich oder verschieden sein können und für Alkylreste mit 1 bis 22 Kohlenstoffatomen oder für funktionelle Gruppen, wie Hydroxyl-, Carbonamid- oder Äthergruppen enthaltende Alkylreste mit bis zu 25 Kohlenstoffatomen wie Methyl-, Äthyl-, (Iso-) propyl-, Butyl-, Octyl-, Dodecyl-, $C_{16}H_{33}-$, Hydroxy(iso) propyl- oder

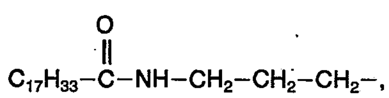

stehen können und $X^{\ominus}$ für ein Anion einer Säure wie J, Cl, Br, $SO_2-$, $CH_3OSO-$, steht, besonders geeignete Tetraalkylammoniumsalze sind z.B. Tri-n-octyl-methylammoniumchlorid und Tridodecylmethylammoniummethasulfat.

2. Tetraalkylphosphoniumsalze der allgemeinen Formel (II)

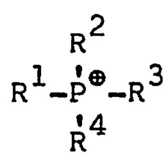 $X^{\ominus}$ , (II)

worin $R^1$, $R^2$, $R^3$, $R^4$ sowie $X^{\ominus}$ die für die Formel (I) angegebene Bedeutung haben, z.B. Tri-n-octylmethyl-phosphoniumsjodid.

3. Kronenäther, wie sie z.B. in dem Artikel von C.J. Petersen und H.K. Frensdorff in Angewandte Chemie 84. Jahrgang (1972) Seite 16ff beschrieben sind,

z.B. 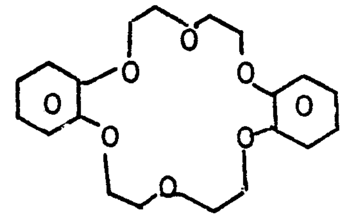

(= Dibenzo- 18 Krone-6)

oder [18] Krone-6.

Weiterhin geeignet sind auch Gemische der oben genannten Phasentransferkatalysatoren.

Die Phasentransferkatalysatoren werden für das erfindungsgemäße Verfahren in Mengen von 0,005 bis 10, vorzugsweise 0,02 bis 1 Molprozent, bezogen auf die Gesamtmenge an Keton und Aldehyd, eingesetzt.

Die Phasentransferkatalysatoren sind im erfindungsgemäßen Verfahren wirksam, obwohl es sich um Reaktionssysteme handelt, die wenigstens zeitweise homogene Lösungen sind und somit die Bedingungen für die literaturbekannte Phasentransferkatalyse überhaupt nicht vorliegen.

Das erfindungsgemäße Verfahren kann sowohl als Suspensionsverfahren, mit Wasser als Verdünnungsmittel bzw. mobile Phase, etwa analog der DL-PS 12 433, in Gegenwart organischer Lösungsmittel, wie z.B. Xylol, Isobutanol oder Benzin, unter Druck bzw. ohne Lösungs- bzw. Verdünnungsmittel vorteilhaft durchgeführt werden. Für das Suspensionsverfahren werden zweckmäßigerweise Dispergiermittel bzw. Schutzkolloide, wie Polyvinylalkohol, Polyvinylpyrrolidon, Carboxymethylcellulose u.a. üblicherweise dafür verwendete Produkte eingesetzt. Die Polykondensationsreaktion wird im allgemeinen bei ca. 20 bis ca. 200 °C, vorzugsweise 40 bis 150 °C durchgeführt.

Die erfindungsgemäß erhaltenen Ketonharze weisen Erweichungspunkte auf, die 10 bis 100 °C höher liegen als die entsprechenden ohne Phasentransferkatalysatoren hergestellten Ketonharze und eignen sich als Lackrohstoffe, Klebrohstoffe, Bindemittel für Druckfarben, Lösungen zum Imprägnieren von Textilien, für Tuschen und Tinten sowie als Konfektionierhilfe für Chemikalien, z.B. zum Umhüllen von Düngemittelpartikeln.

Die in den Beispielen genannten Teile und Prozente sind, sofern nicht anders angegeben, Gewichtsteile und Gewichtsprozente.

## I. Suspensionsverfahren :

Nach diesem Verfahren werden aus Ketonen mit Formaldehyd und/oder anderen Aldehyden unter Zusatz von Alkali in Gegenwart von Wasser und einem Emulgiermittel Kondensationsprodukte in körniger Form erhalten. Dazu werden Keton, Aldehyd, Wasser und Dispergiermittel vorgelegt. Die Natronlauge wird in ein oder mehreren Portionen zugegeben. Dabei steigt die Temperatur des Reaktionsgemisches bis auf etwa 90 °C. Hierbei wird bei ca. 60 °C eine Klarphase durchlaufen, bei etwa 80 °C beginnt die Harzausscheidung. Nach einer Reaktionszeit von 1 bis 2 Stunden bei 90 °C wird abgekühlt das körnige Kondensationsprodukt wird abgesaugt, gewaschen und getrocknet.

### Beispiele 1 bis 13 mit Vergleichsbeispielen A bis G

Wie in der folgenden Tabelle angegeben, werden Keton/Aldehyd-Gemische bei ca. 90 °C in Gegenwart der angegebenen Schutzkolloide, Alkalikatalysatoren und Phasentransferkatalysatoren (PTK) polykondensiert. Ausbeuten und KSN-Erweichungspunkte sind für die einzelnen Polykondensationsprodukte angegeben.

| Beispiele bzw. Vergleichs beispiele | Einsatzstoffe (Tle.: Teile) | Alkali-Katalysator | Phasentransfer-Katalysator | % Ausbeute (4) | Ep(KSH) (5) |
|---|---|---|---|---|---|
| A | 196 Tle. Cyclohexanon, 235 Tle. Formaldehyd (40 %), 0,2 Tle. Polyvinylalkohol | 8 Tle. NaOH | — | 83,8 | 109 °C |
| 1 | wie A | wie A | 10 Tle. a (1) | 87,6 | > 200 °C |
| 2 | wie A | wie A | 3 Tle. b(2) | 83,8 | 118 °C |
| 3 | wie A | wie A | 10 Tle. c(3) | 78,6 | > 200 °C |

| Beispiele bzw. Vergleichs beispiele | Einsatzstoffe (Tle.: Teile) | Alkali-Katalysator | Phasentransfer-Katalysator | % Ausbeute (4) | Ep(KSH) (5) |
|---|---|---|---|---|---|
| B | wie A | 10,8 Tle. $NaOCH_3$ | — | 75,4 | 121 °C |
| 4 | wie A 1 | wie B | 10 Tle. a | 86,5 | > 200 °C |
| C | wie A | 11,2 Tle. KOH | — | 87,5 | 124 °C |
| 5 | wie A | wie C 1 | 10 Tle. a | 84,0 | > 200 °C |
| D | 196 Tle. Cyclohexanon, 243 Tle. Formaldehyd (40 %), 0,2 Tle. Polyvinylpyrrolidon | 7,6 Tle. NaOH | — | 79,8 | 101 °C |
| 6 | wie D | wie D | 0,5 Tle. a | 80,4 | 159 °C |
| 7 | wie D | wie D | 1,5 Tle. a | 81,0 | > 200 °C |
| 8 | wie D | 3,8 Tle. NaOH | 1,5 Tle. a | 81,7 | > 200 °C |
| E | 198 Tle. Cyclohexanon, 235 Tle. Formaldehyd (40 %), 80 Tle. Isobutyraldehyd, 1 Tle. Polyvinylalkohol, 0,2 Tle. Para-dodecyl-phenyl-phenyläther-disulfonsäure-Natriumsalz | 3 Tle. $NaOCH_3$ 37,5 Tle. NaOH | — | 44,2 | 37 °C |
| 9 | wie E | wie E | 5 Tle. a | 83,6 | > 200 °C |
| 10 | wie E | wie E | 5 Tle. c | 72,0 | > 200 °C |
| F | 196 Tle. Cyclohexanon, 210 Tle. Formaldehyd (40 %, 69,8 Tle. Valerionaldehyd, 1,5 Tle. Carboxymethylcell.-Natrium-salz | 3 Tle. $NaOCH_3$ 25 Tle. NaOH | — | 33,0 | 39 °C |
| 11 | wie F | wie F | 7,5 Tle. a | 82,3 | 94 °C |
| 12 | wie F | wie F | 7,5 Tle. c | 69,7 | 82 °C |
| C | 144 Tle. Methyläthylketon, 210 Tle. Formaldehyd (40 %), 57,6 Tle. n-Butyraldehyd, 1,5 Tle. Carboxymethylcell.-Natrium-salz | 3 Tle. $NaOCH_3$ 25 Tle. NaOH | — | kein Harz | — |
| 13 | wie G | wie G | 7,5 Tle. a | 55,3 | 70 °C |

(1) a Tricaprylmethylammoniumchlorid
(2) b 18-Crown-6
(3) c Trioctylmethylphosphoniumjodid
(4) % Ausbeute bezogen auf die Summe der Ketone und Aldehyde
(5) KSH - Krämer-Sarnow-Hagel

II. Kondensation in homogener Phase :

Nach diesem Verfahren werden Ketone mit Aldehyden in Gegenwart von Basen ohne weitere Zusätze (wie z.B. Suspensionshilfsmittel) oder aber in Gegenwart eines Lösungsmittels wie Isobutanol oder Xylol zu Harzen umgesetzt.

Beispiel 14

144 Teile Methyläthylketon, 87 Teile Aceton und 7 Teile Tricaprylmethylammoniumchlorid werden vorgelegt. Dazu werden aus zwei getrennten Tropftrichtern 300 Teile 40 %iger Formaldehyd und 40 Teile 20 %ige NaOH zugegeben. Dabei steigt die Temperatur auf ca. 80 °C an. Nachdem noch 2 Stunden unter Rückfluß erhitzt worden ist, wird abgekühlt, das Wasser abdekantiert, das Harz wird neutral gewaschen und 1 Stunde bei 80 °C im Vakuum getrocknet. So wird mit 79 % Ausbeute ein Hartharz mit einem Erweichungspunkt von 118 °C (KSN) erhalten.

Ohne Phasentransferkatalysator erhält man nach gleichem Verfahren ein Harz mit 68 % Ausbeute mit einem Erweichungspunkt von 88 °C (KSN).

Beispiel 15

Zu 320 Teilen Isobutanol, 392 Teilen Cyclohexanon, 441 Teilen 40 %igem Formaldehyd und 4 Teilen Tricaprylmethylphosphoniumjodid werden in 2 Portionen 9 Teile 50 %ige NaOH zugegeben. Dabei steigt die Temperatur auf ca. 90 °C an. Man Läßt noch 1 Stunde bei dieser Temperatur reagieren. Dann gibt man 3 Teile Oxalsäure zum Reaktionsgemisch. Hierbei schäumt die Reaktionslösung kurz auf. Nun werden ca. 390 Teile Wasser ausgekreist. Dann wird die Reaktionslösung durch ein Filter abgedrückt. Das Lösungsmittel wird abdestilliert und noch 45 Min. bei einer Sumpftemperatur von 140 °C unter Vakuum erhitzt. So wird mit 75 %iger Ausbeute ein Harz mit einem Erweichungspunkt von 148 °C (KSN) erhalten.

Die gleiche Reaktion ohne Phasentransferkatalysator führt mit 69 % Ausbeute zu einem Harz mit einem Erweichungspunkt von 88 °C (KSN).

**Ansprüche**

1. Verfahren zur Herstellung von Polykondensationsprodukten aus aliphatischen oder cyclischen Ketonen oder Gemischen dieser Ketone, ausgenommen Polyfluorketone, mit aliphatischen Aldehyden in Gegenwart basischer Katalysatoren, dadurch gekennzeichnet, daß die Polykondensationsreaktion in Gegenwart von 0,005 bis 10 Molprozent, bezogen auf die Gesamtmenge an Keton und Aldehyd, eines Tetraalkylammoniumsalzes der allgemeinen Formel

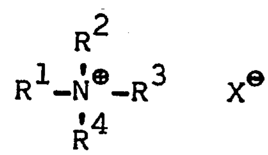

worin $R^1$, $R^2$, $R^3$ und $R^4$ untereinander gleich oder verschieden sein können und für Alkylreste mit 1 bis 22 Kohlenstoffatomen oder für funktionelle Gruppen, wie Hydroxyl-, Carbonamid- oder Äthergruppen enthaltende Alkylreste mit bis zu 25 Kohlenstoffatomen wie Methyl-, Äthyl-, (Iso-)propyl-, Butyl-, Octyl-, Dodecyl-, $C_{16}H_{33}-$, Hydroxy(iso)propyl- oder

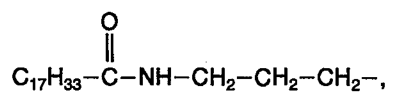

stehen können und $X^{\ominus}$ für ein Anion einer Säure wie J, Cl, Br, $SO_2-$, $CH_3OSO-$, steht, eines Tetraalkylphosphoniumsalzes der allgemeinen Formel

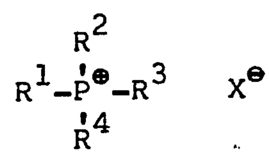

worin $R^1$, $R^2$, $R^3$, $R^4$ sowie $X^{\ominus}$ die oben angegebene Bedeutung haben, oder eines Kronenäthers durchgeführt wird.

2. Verfahren nach Anspruch 1, dadurch gekennzeichnet, daß als Tetraalkylammoniumsalz Tri-n-octyl-methylammoniumchlorid oder Tridodecylmethylammoniummethasulfat verwendet wird.

3. Verfahren nach Anspruch 1, dadurch gekennzeichnet, daß als Tetraalkylphosphoniumsalz Tri-n-octyl-methyl-phosphoniumjodid verwendet wird.

4. Verfahren nach einem der vorhergehenden Ansprüche, dadurch gekennzeichnet, daß als aliphatische Ketone Dialkylketone der allgemeinen Formel

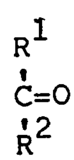 ,

wobei $R^1$ und $R^2$ untereinander gleich oder verschieden sind und für einen Alkylrest mit 1 bis 4 Kohlenstoffatomen stehen, verwendet werden.

5. Verfahren nach einem der vorhergehenden Ansprüche, dadurch gekennzeichnet, daß als cyclische Ketone Cyclopentanon, Cyclohexanon, Cycloheptanon oder derartige $C_1$- bis $C_4$-Alkyl-substitu-

ierte cyclische Ketone verwendet werden.

6. Verfahren nach einem der vorhergehenden Ansprüche, dadurch gekennzeichnet, daß als aliphatische Aldehyde solche mit 1 bis 8 Kohlenstoffatomen verwendet werden.

**Claims**

1. A process for the production of polycondensates of aliphatic or cyclic ketones or mixtures of such ketones, excluding polyfluoroketone, and aliphatic aldehydes in the presence of basic catalysts, characterized in that the polycondensation reaction is carried out in the presence of from 0.005 to 10 mole %, based on the total amount of ketone and aldehyde,
of a tetraalkylammonium salt of the general formula

$$\begin{array}{c} R^2 \\ | \\ R^1-N^{\oplus}-R^3 \qquad X^{\ominus} \\ | \\ R^4 \end{array}$$

where $R^1$, $R^2$, $R^3$ and $R^4$ may be identical or different and denote alkyls of 1 to 22 carbon atoms or functional groups, such as alkyls having up to 25 carbon atoms and containing hydroxyl, carbamoyl or ether groups, such as methyl, ethyl, propyl, isopropyl, butyl, octyl, dodecyl, $C_{16}H_{33}-$, hydroxypropyl, hydroxyisopropyl or

$$\begin{array}{c} \quad O \\ \quad \| \\ C_{17}H_{33}-C-NH-CH_2-CH_2-CH_2-, \end{array}$$

and $X^{\ominus}$ denotes an anion of an acid, such as
I, Cl, Br, $SO_2-$ or $CH_3OSO-$,
of a tetraalkylphosphonium salt of the general formula

$$\begin{array}{c} R^2 \\ | \\ R^1-P^{\oplus}-R^3 \qquad X^{\ominus} \\ | \\ R^4 \end{array}$$

where $R^1$, $R^2$, $R^3$ and $R^4$ have the above meanings, or of a crown ether.

2. A process as claimed in claim 1, characterized in that tri-n-octylmethylammonium chloride or tridodecylmethylammonium methasulphate is used as tetraalkylammonium salt.

3. A process as claimed in claim 1, characterized in that tri-n-octylmethylphosphonium iodide is used as tetraalkylphosphonium salt.

4. A process as claimed in one of the preceding claims, characterized in that dialkyl ketones of the general formula

$$\begin{array}{c} R^1 \\ | \\ C=O \\ | \\ R^2 \end{array}$$

where $R^1$ and $R^2$ are identical or different and denote alkyls of 1 to 4 carbon atoms, are used as aliphatic ketones.

5. A process as claimed in one of the preceding claims, characterized in that cyclopentanone, cyclohexanone, cycloheptanone or such $C_1$-$C_4$-alkyl-substituted cyclic ketones are used as cyclic ketones.

6. A process as claimed in one of the preceding claims, characterized in that there are used as aliphatic aldehydes those having 1 to 8 carbon atoms.

**Revendications**

1. Procédé de préparation de produits de polycondensation de cétones aliphatiques ou cycliques ou de mélanges de ces cétones, à l'exclusion des polyfluorocétones, avec des aldéhydes aliphatiques, en

présence de catalyseurs basiques, caractérisé par le fait que la réaction de polycondensation est effectuée en présence de 0,005 à 10 moles pour cent, rapportée à la quantité totale de cétone et d'aldéhyde,
d'un sel de tétraalkylammonium de formule générale

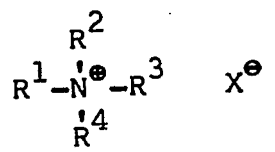

dans laquelle $R^1$, $R^2$, $R^3$ et $R^4$ peuvent être identiques ou différents les uns des autres et peuvent représenter des restes alkyle en $C_1$ à $C_{22}$ ou des groupes fonctionnels tels que des restes alkyle ayant jusqu'à 25 atomes de carbone et contenant des groupes hydroxyle, carbonamide ou éther, notamment méthyl-, éthyl-, isopropyl-, butyl-, octyl, dodécyl-, $C_{16}H_{33}-$, hydroxy(iso) propyl- ou

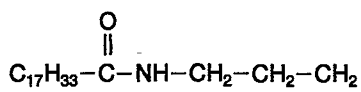

et $X^{\ominus}$ représente un anion d'un acide, tel que
I, Cl, Br, $SO_2-$, $CH_3OSO-$,
d'un sel de tétraalkylphosphonium de formule générale

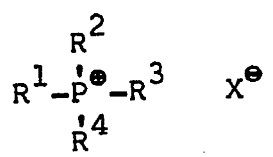

dans laquelle $R^1$, $R^2$, $R^3$, $R^4$ ainsi que $X^{\ominus}$ ont les significations indiquées plus haut, ou d'un éther à « couronne ».

2. Procédé selon la revendication 1, caractérisé par le fait que l'on utilise, comme sel de tétraalkylammonium, du chlorure de tri-n-octyl-méthylammonium ou du méthasulfate de tridodécylméthylammonium.

3. Procédé selon la revendication 1, caractérisé par le fait que l'on utilise, comme sel de tétraalkylphosphonium du iodure de tri-n-octylméthylphosphonium.

4. Procédé selon l'une des revendications précédentes, caractérisé par le fait que l'on utilise comme cétones aliphatiques des dialkylcétones de formule générale

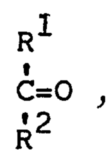

dans laquelle $R^1$ et $R^2$ sont identiques ou différents et représentent un reste alkyle en $C_1$ à $C_4$.

5. Procédé selon l'une des revendications précédentes, caractérisé par le fait que l'on utilise comme cétones cycliques de la cyclopentanone, cyclohexanone, cycloheptanone ou des cétones cycliques de ce type substitués par un alkyle en $C_1$ à $C_4$.

6. Procédé selon l'une des revendications précédentes, caractérisé par le fait que l'on utilise comme aldéhydes aliphatiques des aldéhydes en $C_1$ à $C_8$.